# EUROPEAN PATENT SPECIFICATION

(11) **EP 1 873 984 B1**
(45) Date of publication and mention of the grant of the patent: **17.06.2009**
(21) Application number: 07115485.0
(22) Date of filing: 04.04.2005
(51) Int. Cl.: H04L 12/56, H04B 7/00

(54) **Determining a transmit power in a wireless system according to security requirements**
Bestimmung einer Zielübertragungskraft einer drahtlosen Übertragung gemäß Sicherheitsanforderungen
Détermination d'une puissance de transmission cible d'une transmission sans fil en fonction d'exigences sécuritaires

(43) Date of publication of application: 02.01.2008
(62) Divisional of application: 05102637.5
(73) Proprietor: Research In Motion Limited, Waterloo, Ontario N2L 3W8 (CA)
(72) Inventor: Brown, Michael S., Waterloo, Ontario N2K 4B1 (CA); Little, Herb, Waterloo, Ontario N2T 2V8 (CA); Totzke, Scott, Waterloo, Ontario N2K 3Y5 (CA); Adams, Neil, Waterloo, Ontario N2K 4E4 (CA); Brown, Michael K., Kitchener, Ontario N2M 2Z2 (CA)
(74) Representative: Rickard, David John

(56) References cited:
- GB-A- 2 282 734
- US-A1- 2003 050 009
- US-A1- 2005 059 388

## Description

In general, wireless communication is insecure and vulnerable to attacks. Various techniques may be employed to secure a wireless communication link or to make it less vulnerable to attacks. For example, it is recommended to place a wireless access point away from external walls and to lower the transmit power of its antenna so that the signal strength is strong enough for use inside the building but weak outside of the building where it may be accessible by others.

Bluetooth® wireless technology provides short-range and low power wireless connectivity to eliminate the need for cables to connect computerized devices and their peripheral devices. A non-exhaustive list of examples of computerized devices includes personal computers (PCs), mobile phones, personal digital assistants (PDA), portable computers, pagers, handheld devices, and the like. A non-exhaustive list of examples of peripheral devices includes headsets, printers, keyboards, mice, and the like.

The Bluetooth® specifications were designed with various concepts in mind, including output power control that optimizes power according to device distance. According to the Bluetooth® specification version 1.2, there are three classes of transmitters, and power control is mandatory only for those transmitters in the class where the maximum output power is 100 mW (20 dBm) and the minimum output power at the maximum power setting is 1 mW. At page 33 of the Radio Specification section of the Bluetooth® specification version 1.2, it is stated "The power control (of a power class 1 device) is used for limiting the transmitted power over +4 dBm. Power control capability under +4 dBm is optional and could be used for optimizing the power consumption and overall interference level".

US2003/050009 discloses a Bluetooth® device wherein the output RF transmission power level during pairing is purposefully reduced. After the link keys have been passed and/or other pairing processes, the Bluetooth® device may safely return to normal power levels to continue communications. US2003/050009 does not, however, distinguish between different Bluetooth® devices.

### GENERAL

A device determines different target transmit powers for different wireless transmissions having different security requirements. In the absence of a response to a particular transmission from another device for which the particular transmission is intended, the device increases the target transmit power of the particular transmission.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

Figure 1 is a schematic diagram of an exemplary system, according to some embodiments of the invention;

Figure 2 is a flowchart of a method to be implemented by one of the devices in figure 1, according to some embodiments of the invention; and.

Figure 3 is a block diagram of one of the devices in the system of figure 1, according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

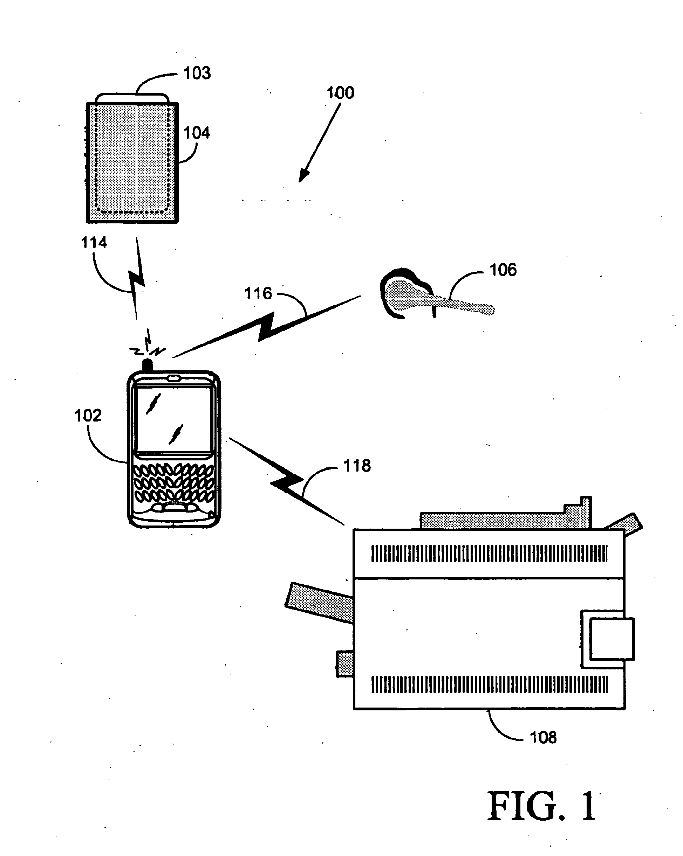

Figure 1 is a schematic diagram of an exemplary system, according to some embodiments of the invention. A system 100 includes a mobile device 102 and one or more additional devices able to communicate with mobile device 102. For example, these other devices may include peripherals such as a wireless smart card reader 104, a wireless headset 106, and a wireless printer 108, which may be able to communicate with device 102 over wireless communication links 114, 116 and 118, respectively. A non-exhaustive list of examples of wireless local area network standards for wireless communication links 114, 116 and 118 includes the Institute of Electrical and Electronic Engineers (IEEE) for Wireless LAN MAC and Physical layer (PHY) 802.11 a, b, g and n specifications or future related standards, the Bluetooth® standard, the Zigbee™ standard and the like.

A smart card 103 is shown inserted into smart card reader 104. Smart cards are personalized security devices, defined by the ISO7816 standard and its derivatives, as published by the International Organization for Standardization. A smart card may have a form factor of a credit card and may include a semiconductor device. The semiconductor device may include a memory that can be programmed with a secret key and with an authentication certificate, and may include a decryption engine, e.g., a processor and/or dedicated decryption logic. A smart card may include a connector for powering the semiconductor device and performing serial communication with an external device. Alternatively, smart card functionality may be embedded in a device having a different form factor and different communication protocol, for example a Universal Serial Bus (USB) device. The person whose security information is stored on smart card 103 may use smart card reader 104 for identification and to digitally sign and/or decrypt messages sent by device 102.

For example, mobile device 102 may be able to send and receive e-mail messages via an e-mail server (not shown). If, for example, the Secure Multipurpose Internet Mail Extensions (S/MIME) protocol is used, e-mail messages received at mobile device 102 are encrypted using a symmetric algorithm with a random session key generated by the sender of the e-mail message. The e-mail message also includes the session key, encrypted using the public key of the recipient. Upon receipt of an encrypted e-mail message, mobile device 102 may extract the encrypted session key and send it to smart card reader 104 via communication link 114. Smart card reader 104 may send the encrypted session key to smart card 103, and the decryption engine of smart card 103 may decrypt the encrypted session key using the recipient's private decryption key, which is stored in smart card 103. Smart card reader 104 may retrieve the decrypted session key from smart card 103 and forward it to mobile device 102 via communication link 114 so that mobile device 102 can decrypt the received e-mail message. The smart card 103 may prevent unauthorized use of the recipient's private decryption key by requiring that a password or personal identification number (PIN) be supplied before allowing the decryption operation to proceed.

Similarly, to add a digital signature to an e-mail message being sent by mobile device 102, mobile device 102 may send a hash of the contents of the e-mail message to smart card reader 104 over communication link 114. Smart card reader 104 may pass the hash to smart card 103, which may produce a digital signature from the hash and the sender's private signing key, which is stored in smart card 103. Smart card 103 may then pass the digital signature to smart card reader 104, which may forward it to mobile device 102 via communication link 114 so that mobile device 102 can transmit it along with the e-mail message to the e-mail server. Again, smart card 103 may prevent unauthorized use of the recipient's private signing key by requiring that a password or PIN be supplied before allowing the signing operation to proceed.

The unencrypted session key should be sent securely over communication link 114 from smart card reader 104 to mobile device 102 to prevent a third party from retrieving the session key from communication link 114. Similarly, the hash to be signed should be sent authentically over communication link 114 from smart card reader 104 to mobile device 102 to prevent a third party from modifying the hash and thereby causing smart card 103 to produce a signature using a hash different from the hash of the intended message. Smart card reader 104 and mobile device 102 may each store a common, symmetric key and use a symmetric algorithm to secure communications over communication link 114. Alternatively, smart card reader 104 and mobile device 102 may store their own private keys and each other's public keys, and use an asymmetric algorithm to secure communications over communication link 114.

Headset 106 may communicate with mobile device 102 over wireless communication link 116 and may extend audio functionality of mobile device 102. For example, mobile device 102 may include cellphone functionality, and headset 106 may provide mobile device 102 with audio input and output functions, enabling a user to listen to voice mail, handle voice calls and issue voice commands to mobile device 102. In another example, mobile device 102 may include audio playback functionality, for example an MP3 (moving picture experts group layer 3 audio) playback functionality, and headset 106 may provide device 102 with an audio output function, enabling a user to listen to audio playback.

Mobile device 102 may include data functionality, for example, e-mail functionality. Mobile device 102 may be able to send data over wireless communication link 118 to be printed by wireless printer 108.

Wireless communication links 114, 116 and 118 may be vulnerable to eavesdropping. However, mobile device 102 may be close physically to one or more of devices 104, 106 and even 108. Thus, device 102 may be able to communicate with devices that are nearby at lower powers than with devices that are farther away.

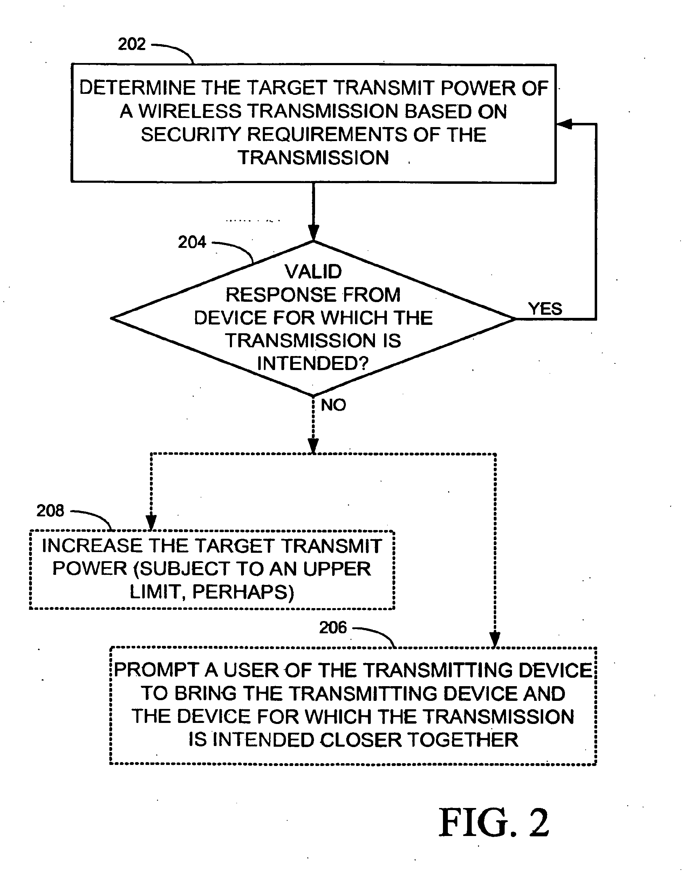

Figure 2 is a flowchart of a method to be implemented by one or more of devices 102, 104 and 106, according to some embodiments of the invention. At 202, one or more of devices 102, 104 and 106 may determine different target transmit powers for different wireless transmissions having different security requirements. The stricter the security requirements, the lower the target transmit power, so that sensitive transmissions are "whispered" and therefore less vulnerable to eavesdropping. The actual transmit power of a wireless transmission, measured at the antenna of the transmitting device, may differ from the target transmit power due to various factors.

The security requirements of a particular transmission may include a predetermined or dynamically determined security ranking of the device to which one or more frames carried by the particular transmission are addressed, with a lower target transmit power for transmissions carrying frames addressed to devices at higher security rankings than for transmission carrying frames addressed to devices at lower security rankings.

For example, since communications between mobile device 102 and smart card reader 104 may be generally more confidential than communications between mobile device 102 and headset 106, mobile device 102 may determine a lower target transmit power for transmissions intended for smart card reader 104 than for transmissions intended for headset 106. However, the security ranking of a device may be dependent on other factors. For example, the security ranking of smart card reader 104 may be lower while the user is at an authorized workplace than while the user is located outside the authorized workplace. At the authorized workplace, mobile device 102 may determine a relatively high target transmit power for transmissions intended for smart card reader 104 so as to avoid retries due to lack of reception by smart card reader 104 of those transmissions.

In another example, if the sender of a transmission recognizes that there are other transmitters in the area (for example, other active Bluetooth® radios), the sender may reduce the target transmit power of the transmission to make it harder for the other transmitters to receive the transmission. This is analogous to "whispering" when someone is standing nearby.

The security requirements of a particular transmission may include the confidentiality of data carried by the particular transmission, with lower target transmit powers for transmissions carrying data of higher confidentiality than for transmissions carrying data of lower confidentiality.

For example, telephone calls with members of the user's family may be considered less confidential than telephone calls with the user's co-workers. Accordingly, the target transmission power for transmissions between mobile device 102 and headset 106 may be lower for some telephone calls than for others.

In another example, documents may have different confidentiality rankings. The target transmission power for transmitting documents from mobile device 102 to printer 108 may vary according to the confidentiality ranking of the document.

In yet another example, as explained hereinabove, to add a digital signature to an e-mail message being sent by mobile device 102, mobile device 102 may send a hash of the contents of the e-mail message to smart card reader 104. Smart card reader 104 may pass the hash to smart card 103, which may produce a digital signature from the hash and the sender's private signing key, which is stored in smart card 103. Smart card 103 may prevent unauthorized use of the recipient's private signing key by requiring that a password or PIN be supplied before allowing the signing operation to proceed. Since the password or PIN is more confidential than the hash of the contents of the e-mail message, mobile device 102 may determine a lower target transmit power for the transmission carrying the password or PIN than for the transmission carrying the hash of the contents of the e-mail message.

If mobile device 102 does not detect a valid response from the device for which the transmission is intended (checked at 204), mobile device 102 may act according to a security policy. For example, at 206, mobile device 102 may prompt the user to bring mobile device 102 and the device for which the transmission is intended closer together. In another example, at 208, mobile device 102 may increase the target transmit power for transmissions intended for that device, possibly subject to an upper limit.

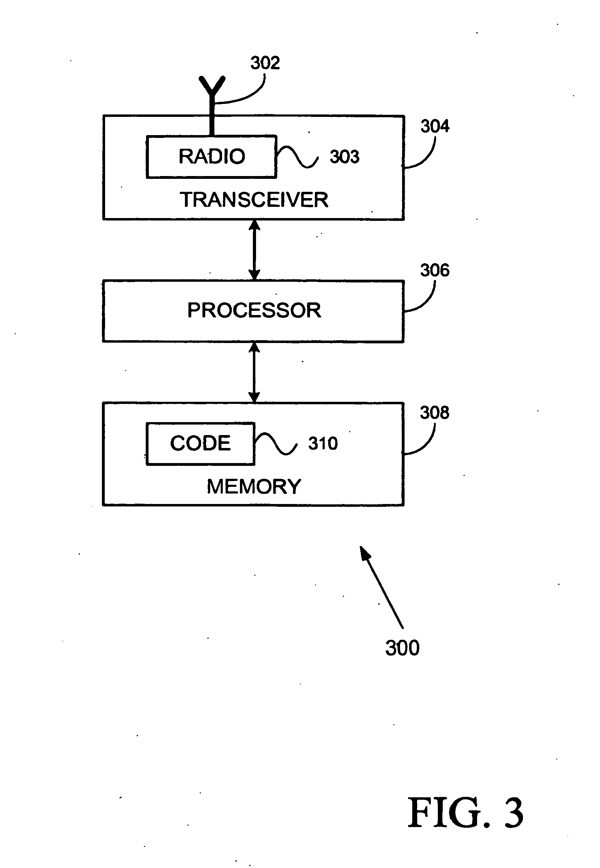

Figure 3 is a block diagram of a device 300, according to some embodiments of the invention. Device 300 may be, for example, mobile device 102, smart card reader 104, or headset 106. For clarity, some components of device 300 are not shown in figure 3 and are not described explicitly below.

Device 300 includes an antenna 302. A non-exhaustive list of examples for antenna 302 includes a dipole antenna, a monopole antenna, a multilayer ceramic antenna, a planar inverted-F antenna, a loop antenna, a shot antenna, a dual antenna, an omnidirectional antenna and any other suitable antenna.

Device 300 also includes a wireless transceiver 304 including a radio 303 coupled to antenna 302. Wireless transceiver 304 includes both transmitter and receiver functionality. A non-exhaustive list of examples for standards with which wireless transceiver 304 may be compatible includes 802.11 a, b, g and n and future related standards, the Bluetooth® standard, the Zigbee™ standard and the like.

Device 300 also includes a processor 306 coupled to transceiver 304. Device 300 also includes a memory 308, which may be fixed in or removable from device 300. Memory 308 may be coupled to processor 306 or partly embedded in processor 306. Transceiver 304 and processor 306 may be part of the same integrated circuit or in separate integrated circuits. Similarly, processor 306 and memory 308 may be part of the same integrated circuit or in separate integrated circuits.

A non-exhaustive list of examples for processor 306 includes a central processing unit (CPU), a digital signal processor (DSP), a reduced instruction set computer (RISC), a complex instruction set computer (CISC) and the like. Furthermore, processor 306 may be part of an application specific integrated circuit (ASIC) or may be a part of an application specific standard product (ASSP).

A non-exhaustive list of examples for memory 308 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

Memory 308 may store executable code 310 which, when executed by processor 306, determines different target transmit powers for different transmissions to be transmitted by transceiver 306 and having different security requirements.

Executable code 310, when executed by processor 306, may cause device 300 to implement the method of Figure 2.

## Claims

1. A device (300) comprising:
a processor (306);
a memory (308) to store executable code means (310) which, when executed by said processor (306), determines different target transmit powers for different transmissions having different security requirements;
a wireless transmitter (304) to transmit said transmissions; and
a wireless receiver (304) for receiving a response from another device (102, 104, 106, 108) for which a particular transmission is intended,
wherein, in the absence of a valid response from said another device (102, 104, 106, 108) for which said particular transmission is intended, said executable code means (310), when executed by said processor (306), increases a target transmit power for said particular transmission.

2. The device (300) of claim 1, wherein said different security requirements comprise security rankings of said devices (102, 104, 106, 108) to which one or more frames carried by said different transmissions are addressed.

3. The device (300) of claim 2, wherein said target transmit powers are lower for transmissions carrying frames addressed to devices having higher security rankings than for transmissions carrying frames addressed to devices having lower security rankings.

4. The device (300) of any one of claims 1 to 3, wherein said different security requirements comprise confidentiality of data carried by said different transmissions.

5. The device (300) of claim 4, wherein said target transmit powers are lower for transmissions carrying data of higher confidentiality than for transmissions carrying data of lower confidentiality.

6. The device (300) of any one of claims 1 to 5, wherein said device (300) is a mobile device (102) or has smart card functionality or is a headset (106).

7. The device (300) of any one of claims 1 to 6, wherein said wireless transmitter (304) is compatible with the Bluetooth® standard.

8. A wireless communications system (100) comprising at least one device (300) according to any one of claims 1 to 7.

9. A method in a wireless-enabled device (300), the method comprising:
determining different target transmit powers for different wireless transmissions having different security requirements; and
in the absence of a valid response to a particular transmission from another device (102, 104, 106, 108) for which a particular transmission is intended, increasing a target transmit power of said particular transmission.

10. The method of claim 9, wherein determining said different target transmit powers comprises determining lower target transmit powers for transmissions carrying frames addressed to devices having higher security rankings than for transmissions carrying frames addressed to devices having lower security rankings.

11. The method of claim 9, wherein determining said different target transmit powers comprises determining lower target transmit powers for transmissions carrying data of higher confidentiality than for transmissions carrying data of lower confidentiality.

12. A computer readable medium (308) comprising code means (310) executable by a processor (306) of the device (300) of any one of claims 1 to 7 for causing said device to perform the steps of the method of any one of claims 9 to 11.

## Patentansprüche

1. Gerät (300), das umfasst:
einen Prozessor (306);
einen Speicher (308) zum Speichern eines ausführbaren Codemittels (310), das bei der Ausführung durch den Prozessor (306) unterschiedliche Zielsendeleistungen für unterschiedliche Sendungen mit unterschiedlichen Sicherheitsanforderungen ermittelt;
einen Drahtlossender (304) zum Senden der Sendungen; und
einen Drahtlosempfänger (304) zum Empfangen einer Antwort von einem anderen Gerät (102, 104, 106, 108), für das eine jeweilige Sendung bestimmt ist,
wobei beim Fehlen einer gültigen Antwort von dem anderen Gerät (102, 104, 106, 108), für das die jeweilige Sendung bestimmt ist, das ausführbare Codemittel (310) bei der Ausführung durch den Prozessor (306) eine Zielsendeleistung für die jeweilige Sendung erhöht.

2. Gerät (300) nach Anspruch 1, wobei die unterschiedlichen Sicherheitsanforderungen Sicherheitsklassifizierungen der Geräte (102, 104, 106, 108) umfassen, an die ein oder mehrere von den unterschiedlichen Sendungen übertragene Frames adressiert sind.

3. Gerät (300) nach Anspruch 2, wobei die Zielsendeleistungen für Sendungen, die an Geräte mit höheren Sicherheitsklassifizierungen adressierte Frames übertragen, geringer sind als für Sendungen, die an Geräte mit geringeren Sicherheitsklassifizierungen adressierte Frames übertragen.

4. Gerät (300) nach einem der Ansprüche 1 bis 3, wobei die unterschiedlichen Sicherheitsanforderungen die Vertraulichkeit von von den unterschiedlichen Sendungen übertragenen Daten umfassen.

5. Gerät (300) nach Anspruch 4, wobei die Zielsendeleistungen für Sendungen, die Daten mit höherer Vertraulichkeit übertragen, geringer sind als für Sendungen, die Daten mit geringerer Vertraulichkeit übertragen.

6. Gerät (300) nach einem der Ansprüche 1 bis 5, wobei das Gerät (300) ein Mobilgerät (102) ist oder Chipkartenfunktionalität aufweist oder ein Headset (106) ist.

7. Gerät (300) nach einem der Ansprüche 1 bis 6, wobei der Drahtlossender (304) mit dem Bluetooth®-Standard kompatibel ist.

8. Drahtloskommunikationssystem (100), das mindestens ein Gerät (300) gemäß einem der Ansprüche 1 bis 7 umfasst.

9. Verfahren in einem drahtlos aktivierten Gerät (300), wobei das Verfahren umfasst:
Ermitteln unterschiedlicher Zielsendeleistungen für unterschiedliche drahtlose Sendungen mit unterschiedlichen Sicherheitsanforderungen; und
beim Fehlen einer gültigen Antwort auf eine jeweilige Sendung von einem anderen Gerät (102, 104, 106, 108), für das eine jeweilige Sendung bestimmt ist, Erhöhen einer Zielsendeleistung der jeweiligen Sendung.

10. Verfahren nach Anspruch 9, wobei das Ermitteln der unterschiedlichen Zielsendeleistungen das Ermitteln geringerer Zielsendeleistungen für Sendungen, die an Geräte mit höheren Sicherheitsklassifizierungen adressierte Frames übertragen, als für Sendungen, die an Geräte mit geringeren Sicherheitsklassifizierungen adressierte Frames übertragen, umfasst.

11. Verfahren nach Anspruch 9, wobei das Ermitteln der unterschiedlichen Zielsendeleistungen das Ermitteln geringerer Zielsendeleistungen für Daten mit höherer Vertraulichkeit übertragende Sendungen als für Daten mit geringerer Vertraulichkeit übertragende Sendungen umfasst.

12. Computerlesbares Medium (308), das ein Codemittel (310) umfasst, das von einem Prozessor (306) des Geräts (300) nach einem der Ansprüche 1 bis 7 ausführbar ist, um zu bewirken, dass das Gerät die Schritte des Verfahrens nach einem der Ansprüche 9 bis 11 durchführt.

## Revendications

1. Un dispositif (300) comportant :
un processeur (306) ;
une mémoire (308) pour stocker un moyen de code exécutable (310) qui, lorsqu'il est exécuté par ledit processeur (306), détermine des puissances de transmission cibles différentes pour des transmissions différentes ayant des exigences de sécurité différentes ;
un transmetteur sans fil (304) pour transmettre lesdites transmissions ; et
un récepteur sans fil (304) pour recevoir une réponse d'un autre dispositif (102, 104, 106, 108) auquel une transmission particulière est destinée,
dans lequel, en l'absence d'une réponse valide dudit autre dispositif (102, 104, 106, 108) auquel ladite transmission particulière est destinée, ledit moyen de code exécutable (310), lorsqu'il est exécuté par ledit processeur (306), augmente une puissance de transmission cible pour ladite transmission particulière.

2. Le dispositif (300) de la revendication 1, dans lequel lesdites exigences de sécurité différentes comportent des classements de sécurité desdits dispositifs (102, 104, 106, 108) auxquels une ou plusieurs trame(s) transportée(s) par lesdites transmissions différentes est/sont adressée(s).

3. Le dispositif (300) de la revendication 2, dans lequel lesdites puissances de transmission cibles sont plus basses pour des transmissions transportant des trames adressées à des dispositifs ayant des classements de sécurité plus hauts que pour des transmissions transportant des trames adressées à des dispositifs ayant des classements de sécurité plus bas.

4. Le dispositif (300) de n'importe laquelle des revendications 1 à 3, dans lequel lesdites exigences de sécurité différentes comportent la confidentialité de données transportées par lesdites transmissions différentes.

5. Le dispositif (300) de la revendication 4, dans lequel lesdites puissances de transmission cibles sont plus basses pour des transmissions transportant des données de confidentialité plus haute que pour des transmissions transportant des données de confidentialité plus basse.

6. Le dispositif (300) de n'importe laquelle des revendications 1 à 5, dans lequel ledit dispositif (300) est un dispositif mobile (102) ou a une fonctionnalité de carte intelligente ou est un casque d'écoute (106).

7. Le dispositif (300) de n'importe laquelle des revendications 1 à 6, dans lequel ledit transmetteur sans fil (304) est compatible avec la norme Bluetooth®.

8. Un système de communication sans fil (100) comportant au moins un dispositif (300) selon n'importe laquelle des revendications 1 à 7.

9. Un procédé dans un dispositif équipé pour le sans fil (300), le procédé comportant les étapes suivantes :
déterminer des puissances de transmission cibles différentes pour des transmissions sans fil différentes ayant des exigences de sécurité différentes ; et
en l'absence d'une réponse valide à une transmission particulière d'un autre dispositif (102, 104, 106, 108) auquel une transmission particulière est destinée, augmenter une puissance de transmission cible de ladite transmission particulière.

10. Le procédé de la revendication 9, dans lequel la détermination desdites puissances de transmission cibles différentes comporte la détermination des puissances de transmission cibles plus basses pour des transmissions transportant des trames adressées à des dispositifs ayant des classements de sécurité plus hauts que pour des transmissions transportant des trames adressées à des dispositifs ayant des classements de sécurité plus bas.

11. Le procédé de la revendication 9, dans lequel la détermination desdites puissances de transmission cibles différentes comporte la détermination des puissances de transmission cibles plus basses pour des transmissions transportant des données de confidentialité plus haute que pour des transmissions transportant des données de confidentialité plus basse.

12. Un support lisible par ordinateur (308) comportant un moyen de code (310) exécutable par un processeur (306) du dispositif (300) de n'importe laquelle des revendications 1 à 7 pour amener ledit dispositif à réaliser les étapes du procédé de n'importe laquelle des revendications 9 à 11.
